**Europäisches Patentamt**

**European Patent Office**

**Office européen des brevets**

(11) Veröffentlichungsnummer: **0 128 283**
A1

(12) # EUROPÄISCHE PATENTANMELDUNG

(21) Anmeldenummer: **84103641.1**

(22) Anmeldetag: **03.04.84**

(51) Int. Cl.³: **G 01 K 7/24,** G 08 C 19/22,
H 03 K 7/08

(30) Priorität: **06.05.83 DE 3316528**

(43) Veröffentlichungstag der Anmeldung: **19.12.84**
**Patentblatt 84/51**

(84) Benannte Vertragsstaaten: **DE FR IT**

(71) Anmelder: **ROBERT BOSCH GMBH, Postfach 50,
D-7000 Stuttgart 1 (DE)**

(72) Erfinder: **Braun, Günter, Uhlandstrasse 8,
D-7141 Freiberg a. N. (DE)**
Erfinder: **Kosak, Wolfgang, Mendelssohnstrasse 14,
D-7141 Möglingen (DE)**
Erfinder: **Seibel, Berthold, Adolfstrasse 14,
D-7014 Kornwestheim (DE)**
Erfinder: **Klinkenberg, Reinhard, Grimmstrasse 6,
D-7000 Stuttgart 1 (DE)**

(54) Verfahren und Vorrichtung zur Unwandlung eines Temperaturwerts.

(57) Verfahren und Vorrichtung zur Umwandlung eines Temperaturwerts oder -verlaufs in eine von einer logischen Steuer- oder Rechnerschaltung (15) auswertbare, digitale Größe, mit einem die Temperatur als analogen Widerstandswert oder -änderung abbildenden NTC-Widerstand (10a). Der NTC-Widerstand (10a) ist entweder durch Erzeugen einer temperaturabhängigen Spannung an der Aufladung oder durch Teilnahme an einem Widerstandentladenetzwerk an der Entladung eines auf konstante Spannung aufgeladenen Kondensators (C) beteiligt, so daß sich jeweils vom Zeitpunkt der Entladung an bis zum Erreichen eines vorgegebenen Schwellenwerts eine Zeitdauer ergibt, die temperaturabhängig ist. Diese Zeitdauer kann von einem auswertenden Rechner (15) durch Auszählen etwa mit dem Systemtakt oder interner Software-Schleifen gemessen und durch Adressierung einer entsprechenden Temperaturtabelle gespeichert werden.

0128283

Mü
R. 18549
1703/ot/wi
5.4.83

Firma Robert Bosch GmbH, 7000 Stuttgart 1

## Verfahren und Vorrichtung zur Umwandlung eines Temperaturwerts

### Stand der Technik

Die Erfindung geht aus von einem Verfahren und einer Vorrichtung nach der Gattung des Hauptanspruchs bzw. des ersten Vorrichtungsanspruchs. Es ist bekannt, zur Umsetzung von Temperaturwerten oder Temperaturverläufen, die beispielsweise bei Regelungs- oder Steuerungsverfahren, insbesondere auch im Anwendungsbereich der Kraftfahrzeugelektronik, Einspritzsysteme, für Warmlauf und Kaltstart benötigt werden, übliche, im ganzen auch käuflich zu erwerbende Analog-Digitalwandler einzusetzen. In diesem Zusammenhang ist es ferner bekannt, zur Erfassung der Temperatur temperaturabhängige Widerstände zu verwenden, die als NTC-Widerstände bezeichnet werden und in dem jeweils relevanten Temperaturbereich eine gut auswertbare Widerstandsänderung über der Temperatur zeigen. Bei einfachen Systemen empfiehlt sich jedoch häufig der Einsatz üblicher Analog-Digitalwandler zur
Temperaturauswertung für die Anwendung von Mikroprozessoren
oder Mikrocomputern aus Kostengründen nicht, außerdem verfügen käufliche Analog-Digitalwandler in der Regel nicht
über einen sog. Second-Source-Anschluß.

Vorteile der Erfindung

Das erfindungsgemäße Verfahren mit den kennzeichnenden Merkmalen des Hauptanspruchs bzw. die erfindungsgemäße Vorrichtung mit den kennzeichnenden Merkmalen des ersten Vorrichtungsanspruchs haben demgegenüber den Vorteil, daß eine
einfache und vor allen Dingen kostengünstige Temperaturumwandlung in eine Größe möglich ist, die sich besonders gut
zur Temperaturauswertung bei digitalen Systemen eignet, ohne
daß es notwendig ist, hierfür Analog-Digitalwandler einzusetzen. Die erfindungsgemäße Temperaturauswerteschaltung ist
so aufgebaut, daß sie in Verbindung mit einem den Vorgang
insgesamt steuernden Rechner oder einer logischen Steuerschaltung die Widerstandsänderung des zur Erfassung der Temperatur weiterhin eingesetzten NTC-Widerstands oder den jeweiligen Widerstandswert in einen zeitdauermodulierten Impuls
umwandelt, der von dem diesen Impuls weiter verarbeitenden
digitalen System beispielsweise durch Auszählen mit dem Systemtakt problemlos ausgewertet werden kann.

Vorteilhaft ist ferner, daß die durch die Erfindung ermöglichte Spannungs-Impulswandlung mit einer variablen Spannung und einer festen Zeitkonstanten durchgeführt wird, wobei die variable Spannung aus dem Wert des temperaturabhängigen Widerstandes abgeleitet ist und die feste Zeitkonstant
von einem Energiespeicher, üblicherweise einer Kapazität
mit zugeordneten Widerständen gebildet ist.

In einer zweiten Variante des erfindungsgemäßen Grundgedankens wird mit einer konstanten Ladespannung für den Energiespeicher gearbeitet, während die Endladung unter anderem über
den eingesetzten NTC-Widerstand läuft, so daß sich auch hier
wieder eine Zeitdauermodulation eines elektrischen Spannungs-
oder Stromimpulses ergibt, der von nachgeschalteten Rechenschaltungen oder Steuerschaltungen gut ausgewertet werden
kann.

Durch die in den Unteransprüchen aufgeführten Maßnahmen sind
vorteilhafte Weiterbildungen und Verbesserungen der Erfindung
möglich. Besonders vorteilhaft ist die Möglichkeit, eine
vorgegebene, aus dem Temperaturverhalten des eingesetzten
NTC-Widerstands gewonnene Warmlaufspannung bei Anwendung im
Kraftfahrzeugbereich auf einen Kondensator als Speicher zu
schalten, dessen Entladungsspannung mit einer vorgegebenen,
konstanten Schwelle verglichen wird. Dabei wird während des
Entladevorgangs die Eingangsschaltung, die die temperaturabhängige Spannung auf den Kondensator gegeben hat, über eine
ideale Diode abgetrennt, so daß keine Verfälschungen oder
Meßfehler auftreten können. Die erfindungsgemäße Temperaturauswertung und Umsetzung ist daher bei einfachstem Aufbau
von beträchtlicher Genauigkeit und liefert zwischen vorgegebenen Zeitpunkten, deren erster durch ein Abfragesignal
vom Rechner oder Mikroprozessor bestimmt werden kann, ein
temperaturproportionales Zeitdauersignal. Die Auswerteschaltung ist daher in der Lage, die zwischen den beiden Steuersignalen liegende Zeitdauer per eingegebener Software-
Informationen auszuwerten und je nach Erfordernis, einer vorgegebenen Temperaturtabelle zuzuordnen. In diesem Zusammenhang ist es durch entsprechende Zuordnung beispielsweise von Warmlaufwerten bei einem Kraftfahrzeug möglich, auch den Zustand einer NTC-Widerstandsunterbrechung zu erfassen, beispielsweise dann, wenn Temperaturen zur Auswertung gelangen, die unter -50 °C liegen. Die jeweilige Auswerteschaltung kann dann auf Notlaufmaßnahmen übergehen.


Zeichnung

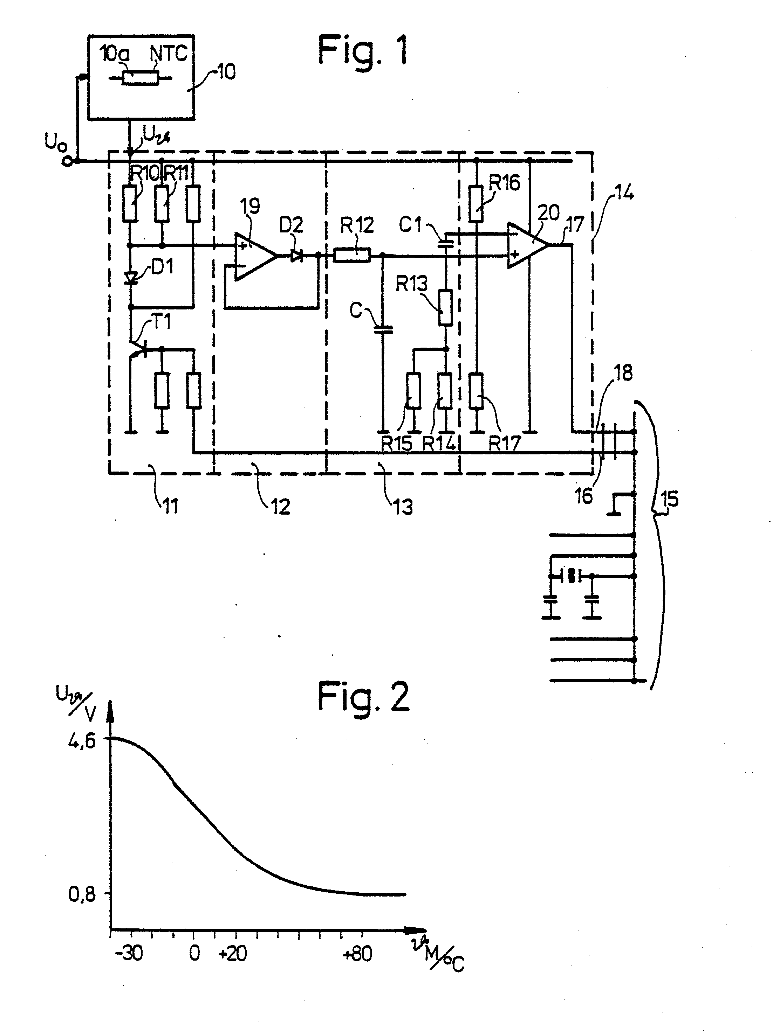

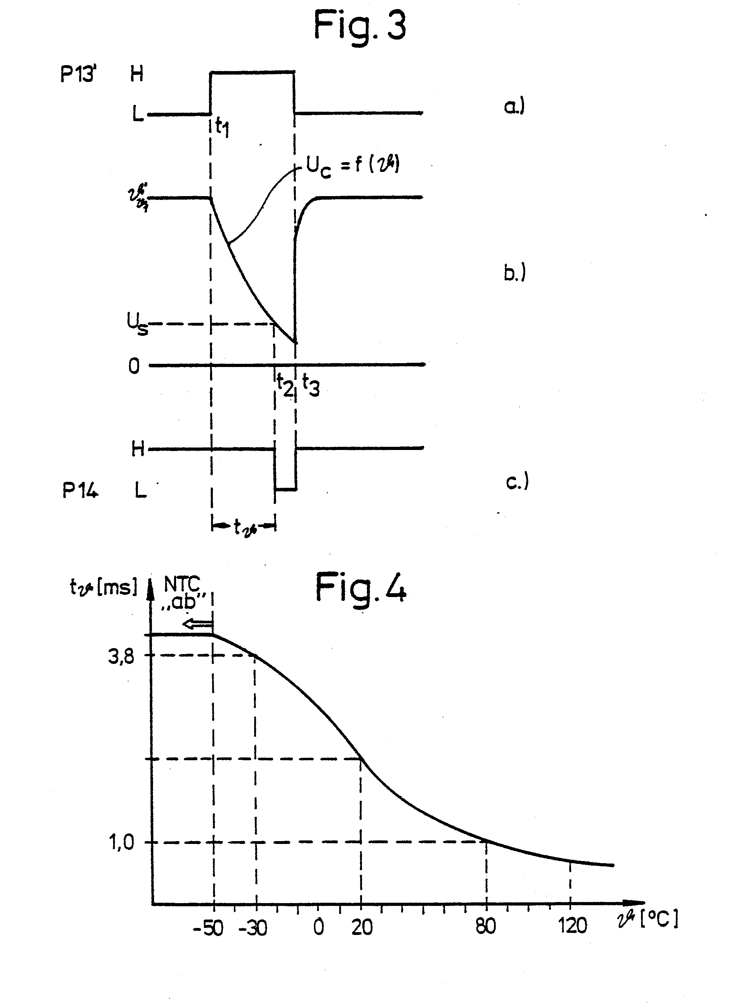

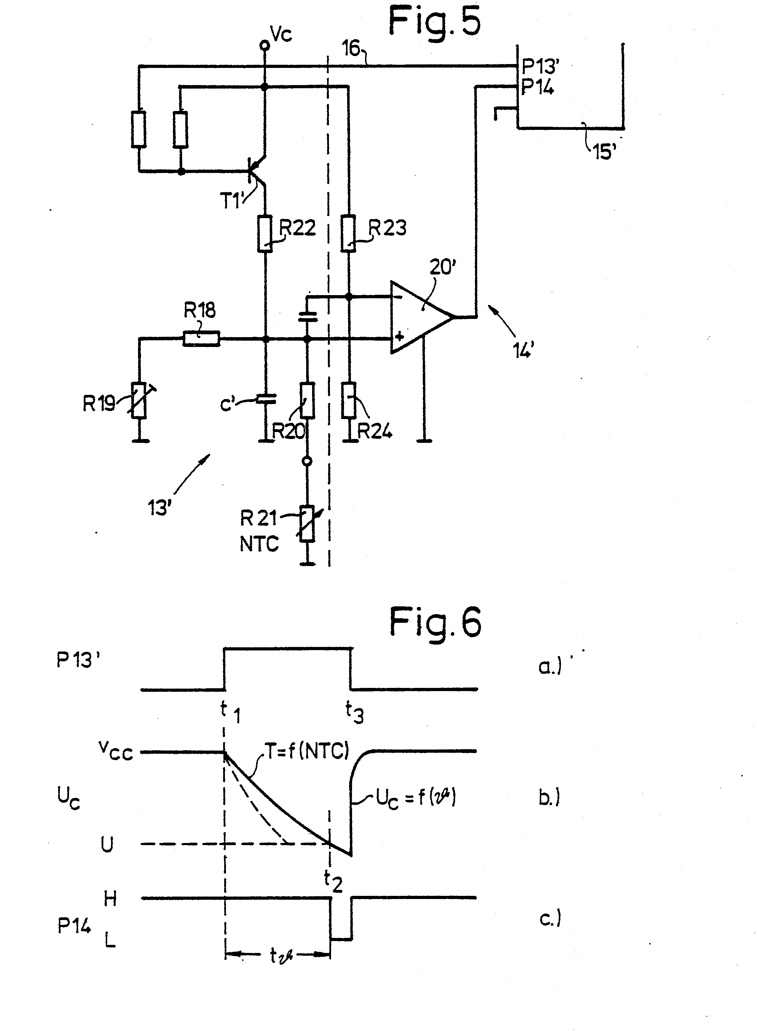

Ausführungsbeispiele der Erfindung sind in der Zeichnung dargestellt und werden in der nachfolgenden Beschreibung näher erläutert. Es zeigen Fig. 1 eine erste Ausführungsform einer Temperaturumwandlungs- und -auswerteschaltung in detaillierter Darstellung mit angedeuteter Teildarstellung eines die Vorgänge steuernden und auswertenden Rechners, Fig. 2 den Kennlinienverlauf einer Temperaturspannung über der Temperatur entsprechend dem jeweils gewählten Ausführungsbeispiel eines NTC-Widerstands, die Fig. 3 in Form von Diagrammen Spannungsverläufe an Schaltungspunkten der Fig. 1 und die Fig. 4 einen möglichen Kennlinienverlauf der durch die vorliegende Erfindung vermittelten Zeitdauern über der Temperatur, Fig. 5 zeigt eine zweite Ausführungsform der Erfindung in detaillierter Schaltungsdarstellung, bei welcher sich der temperaturabhängige NTC-Widerstand im Entladekreis befindet, und die Fig. 6 zeigt den Verlauf von Spannungen über der Zeit an verschiedenen Schaltungspunkten der Fig. 5 in Form von Diagrammen.

Beschreibung der Ausführungsbeispiele

Der Grundgedanke vorliegender Erfindung besteht darin, unter
Ausnutzung des sich in Abhängigkeit zur Temperatur ändernden Widerstands-Kennlinienverlaufs eines temperaturabhängigen Widerstandes, üblicherweise eines NTC-Widerstandes
zeitdauermodulierte elektrische Impulse zu erzeugen, die
von digitalen Systemen problemlos zur Temperaturerfassung
ausgewertet werden können.

Bei dem in Fig. 1 gezeigten ersten Ausführungsbeispiel erfolgt
die Auswertung dadurch, daß man zunächst den sich ändernden
Widerstandsverlauf in eine entsprechende Spannungsänderung
umwandelt, so daß sich eine Temperaturspannung $U_\vartheta$ ergibt,
mit der dann weiter gearbeitet wird. Die in Fig. 1 gezeigte
Schaltung umfaßt einen Temperaturspannungsblock 10, einen
Startblock 11, maßgebend für den Beginn des zeitdauermodulierten Impulses, einen sich daran anschließenden Impedanzwandler-Trenndiodenblock 12, einen Lade- und Entladeblock 13
und schließlich einen Vergleichsblock 14.

Die Schaltung ist so ausgebildet,    daß sie von einem bei
15 lediglich angedeuteten zentralen Rechner, einem Mikroprozessor, einem Mikrocomputer oder einem ähnlichen digitalen
System einen primären Steuer- oder Abfrageimpuls über eine
Verbindungsleitung 16 zugeführt erhält, der beispielsweise
darin bestehen kann, daß der Rechner 15 seinen Anschluß
P13 (Port13) hochlegt (High-Signal ausgibt). Dieses Abfragesignal auf der Leitung 16 führt dazu, daß ein Energiespeicher, im üblichen Fall ein Kondensator, worauf weiter unten
im einzelnen noch eingegangen wird, aus einer temperaturbezogenen Ladung bis auf einen vorgegebenen Schwellenwert entladen wird, woraufhin dann ein Endsignal am Ausgang 17 des
Vergleichsblocks 14 ergeht und über die Verbindungsleitung
18 dem digitalen System 15 wieder zugeführt wird. Ein das
digitale System 15 zur Auswertung bildender Rechner kann
dann mit Hilfe interner Software-Schleifen oder mittels
seines Systemtakts die zwischen den beiden Signalen liegende Zeit messen und einen entsprechenden Temperaturwert abspeichern.

Zur Durchführung dieser Grundfunktion ist der Temperaturspannungsblock 10 so ausgebildet, daß er mindestens einen
Temperaturgeber, üblicherweise einen temperaturabhängigen
Widerstand oder NTC-Widerstand 10a enthält, der in geeigneter, hier im einzelnen nicht zu erläuternder Weise weiteren
Widerständen so zugeschaltet ist, daß sich ein Spannungsnetzwerk ergibt, welches von einer konstanten Eingangsspannung $U_o$, die auch die restlichen Schaltungselemente mit
einer im wesentlichen konstanten Spannung versorgt, gespeist
ist. Es ergibt sich dann an einem geeigneten Abgriff in
Verbindung mit dem NTC-Widerstand eine temperaturabhängige
Spannung $U_\vartheta$, deren Verlauf über der Temperatur beispielsweise so wie in Fig. 2 in Form des Diagramms dargestellt
sein kann. Es ist nicht erforderlich, die im wesentlichen
nichtlineare Abhängigkeit der Temperaturspannung $U_\vartheta$ von der
Temperatur zu linearisieren, was innerhalb gewisser Grenzen
durch Zuschalten von Widerständen u.dgl. geschehen könnte,
denn durch die Auswertung des temperaturbezogenen Zeitintervalls durch ein digitales System bei 15, welches ohnehin
über entsprechende Software-Informationen verfügt, kann die
Linearisierung, soweit erforderlich, in diesem Bereich vorgenommen werden.

Vom Temperaturspannungsblock 10 gelangt die Temperaturspan-

nung $U_\vartheta$ auf ein Spannungsteilernetzwerk aus R10 und R11, wird
von diesem hochgeteilt, da der Fußpunkt von R11 an die Versorgungsspannung $U_o$ angeschlossen ist und wird dann dem
einen Eingang (+) eines Impedanzwandlers 19 zugeführt. An
den Verbindungspunkt der beiden Widerstände R10 und R11 ist
über eine Diode D1 die Schaltstrecke, also die Kollektoremitterstrecke eines Halbleiterschaltelements, nämlich des
Transistors T1 angeschlossen, dem das High-Signal vom Rechner 15 zugeführt ist. Dem Impedanzwandler 19 ist eine Trenndiode D2 nachgeschaltet, dessen Kathode mit dem anderen
Eingang (-) des Impedanzwandlers 19 verbunden ist. Dieser
stellt daher, zusammen mit der Diode D2 eine ideale Diode
dar, die bei Umschaltung einwandfrei trennt. Über einen
Zwischenwiderstand R12 gelangt ein modifizierter Wert $U_\vartheta'$
der Temperaturspannung auf den Kondensator C, dem ein Entladenetzwerk aus der Reihenschaltung der Widerstände R13
mit R14 und parallel zu letzterem R15 parallel geschaltet
ist. Kondensator C und das Entladenetzwerk sind mit dem
einen Eingang (+) eines nachgeschalteten Komparators 20
verbunden, dessen anderem Eingang über die Teilerschaltung
aus R16 und R17 eine konstante Bezugsspannung zugeführt ist.

Es ergibt sich dann folgende Wirkungsweise. Die vom Temperaturspannungsblock 10 kommende Temperaturspannung $U_\vartheta$, deren numerische Werte beispielsweise zwischen 0,8 bis 4,6 V
liegen und bei Anwendung bei einem Kraftfahrzeug eine etwa
von einem Einspritzteil kommende Warmlaufspannung sein kann,
gelangt bei durchgeschaltetem Impedanzwandler 19 als Spannung $U_\vartheta'$ auf den Kondensator C, der dann auf diesen Spannungswert praktisch jeweils aufgeladen ist. Die Spannung
$U_\vartheta'$ über dem Kondensator C ergibt sich aus der Widerstandsverteilung wie folgt

1703/ot/wi
5.4.83                     - 8 -

$$U_{U}^{1} = U_{U} + \frac{U_O - U}{R10 + R11} \cdot R10.$$

Da der Reihenwiderstand R12 nach dem Impedanzwandler 12
gegenüber der Netzwerkkombination aus R13, R14 und R15 sehr
klein ist, ist ein hierdurch bewirkter eventueller Fehler
vernachlässigbar.

Sobald dann der Rechner 15, wie er im folgenden lediglich
noch bezeichnet wird, über die Leitung 16 dem Transistor
T1 ein High-Signal zuführt (s. hierzu auch den Kurvenverlauf bei a) in Fig. 3), wird der Transistor T1 leitend und
verbindet den Schaltungspunkt, an welchen der Transistor
über die Diode D1 angreift (Eingang des Impedanzwandlers
19),praktisch mit Masse. Dies geschieht im Diagramm der
Fig. 3 zum Zeitpunkt t1, und zu diesem Zeitpunkt sperrt
dann auch die ideale Diode des Blocks 12 und hängt den Kondensator C über den Widerstand R12 ab. Der Kondensator entlädt sich dann durch die Reihen-Parallelschaltung aus R13,
R14 und R15, während welcher Entladungszeit der Ausgang 17
des Komparators 20 noch auf dem Schaltzustand high verbleibt und in entsprechender Weise den Anschluß Port14 des
Rechners 15 ansteuert (s. hierzu die Spannungsverläufe 3b)
und c) in Fig. 3). Unterschreitet die Kondensatorspannung
die Komparatorschwelle Us, die sich aus den Widerständen R16
und R17 zu

$$Us = Uo \cdot \frac{R17}{R17 + R16}$$

ergibt, kippt der Komparatorausgang auf low (zum Zeitpunkt
t2) und schaltet auch den Port14 des Rechners 15 auf low.

Infolgedessen liegt im Rechner ein definiertes Zeitintervall t2-t1 vor, welches temperaturabhängig ist; der Rechner
mißt diese Zeit mit Hilfe interner Software-Schleifen und speichert den sich jeweils ergebenden Temperaturwert ab.
Anschließend, und zwar zu jedem beliebigen Zeitpunkt, setzt
dann der Rechner den Port P13 wieder auf low (Zeitpunkt t3),
der Transistor T1 sperrt, und der Kondensator C kann sich
schnell wieder mit der Zeitkonstanten $\tau$ = C·R12 auf $U_\mu$'
aufladen. Der Komparatorausgang schaltet dann nach der
Aufladung ebenfalls wieder auf high. Da sich im elektronischen Sprachgebrauch die Ausdrücke high und low als prägnant
und praktisch im Gebrauch erwiesen haben, werden diese hier
durchlaufend verwendet, wobei diese Ausdrücke im Grunde beliebige logische Signale darstellen und vereinbarungsgemäß
high für hochliegendes Signal und low für niederliegendes
oder Null-Signal steht.

Für die Zeit t2-t1 = $t_\mu$ gilt

$$t_\mu = -\tau \ln \frac{Us}{U_\mu'} \, ,$$

mit $\tau$ = C(R13+R15$\|$R16) .

Durch die in einem ROM oder PROM des Rechners 15 gespeicherte Tabelle bezüglich des Kurvenverlaufs des Zeitintervalls
$t_\mu$ über der Temperatur $\vartheta$ ist es für den Rechner dann möglich, die jeweilige Temperatur zu erkennen und entsprechend
auszuwerten, bei Anwendung an ein Kraftfahrzeug also bei
niedrigen Temperaturen die Einspritzanlage zur Zuführung
von Kraftstoffmehrmengen zu veranlassen o. dgl. Ferner ist
es möglich, auch eine Temperatur von -50°, die in vorliegenden Breiten ja praktisch nicht als Außentemperaturen vorkommen, zu erkennen und dann entsprechend einer Vereinbarung
für den Rechner so weiter zu verfahren, als wenn sich hier
ein Widerstandswert für den temperaturabhängigen Widerstand
von $R_{NTC}$ = ∞ ergibt, d.h. der Rechner geht in diesem Fall davon aus, daß der NTC-Widerstand entweder abgefallen oder
sonstwie gestört ist, und kann dann geeignete Notmaßnahmen
einleiten. Ein Querkondensator C1 über den Eingängen des
Komparators 20 dient einer Störimpulsunterdrückung.

Das in Fig. 5 gezeigte zweite Ausführungsbeispiel einer
Auswerteschaltung einer Temperatur durch Umwandlung in einen
zeitdauermodulierten elektrischen Impuls basiert darauf, daß
in diesem Fall der Speicher, der wiederum ein Kondensator
ist und mit C' bezeichnet ist, mit einer konstanten Spannung aufgeladen und über ein Netzwerk entladen wird, welches
den temperaturabhängigen NTC-Widerstand enthält.

Diese, weiter vereinfachte und kostengünstige Lösung ist
besonders dann interessant, wenn keine temperaturabhängige
Spannung, etwa als Warmlaufspannung zur Verfügung steht.
Die Schaltung der Fig. 5 umfaßt einen modifizierten Lade-
und Entladeblock 13' und einen Vergleichsblock 14' mit einem
Komparator 20'.

Parallel und daher als Entladewiderstände zum Speicherkondensator C' wirksam sind die Widerstände R18 in Reihe mit R19
und R20 in Reihe mit dem NTC-Widerstand R21 geschaltet.
Die Schaltstrecke eines vom Port P13 des Rechners 15' über
die Steuerleitung 16' angesteuerten Schalttransistors T1'
liegt über einen Reihenwiderstand R22 am Speicherkondensator
C11, der daher über den Transistor T1', wenn dieser leitend
geschaltet ist, an einer konstanten Lade- und Versorgungsspannung Vc anliegt. Die Versorgungsspannung Vc gelangt
ferner über einen Spannungsteiler R23, R24 auf den anderen
(-) Eingang des Vergleichers oder Komparators 20' zur Bezugsspannungsbildung, der + Eingang ist mit dem Kondensator
C' verbunden. Es ergibt sich dann folgende Wirkungsweise.

Im Ruhezustand ist der Kondensator C' dauernd auf die konstante Versorgungsspannung Vc aufgeladen; wird dann über den Port P13' des Rechners 15' der Transistor T1' gesperrt (also nicht wie im Ausführungsbeispiel der Fig. 1 leitend geschaltet), entlädt sich der Kondensator C' über R18 in Reihe mit R19 insgesamt parallel zu R20 in Reihe mit R21 (NTC-Widerstand). Die entsprechenden Kurvenverläufe sind in Fig. 6 bei a) und b) angegeben; sie entsprechen im Prinzip den Diagrammdarstellungen der Fig. 3 des ersten Ausführungsbeispiels.

Für die Entladezeitkonstante bis zum Erreichen der Komparatorschwellenspannung Us gilt:

$$\tau'_E = C' \cdot (R20 + R21_{NTC} \| R18 + R19).$$

Die Komparatorschwelle Us ist dabei zu

$$Us = Vc \cdot \frac{R24}{R23 + R24}$$

gegeben. Die Funktion entspricht im wesentlichen der ersten Ausführungsform, wobei das temperaturabhängige Zeitintervall $t_\mu = t2 - t1$ in diesem Fall aus dem Zusammenhang von

$$t_\mu = -\tau'_E \cdot \ln Us/U_E$$

mit

$$U_E = Vc(1 - e^{-t/\tau_E}) \qquad \text{gegeben ist.}$$

Der Anschaltwiderstand R22 des Kopfpunktes des RC-Gliedes an die Transistorschaltstrecke ist dabei wesentlich geringer und damit vernachlässigbar mit Bezug auf die parallel geschalteten Reihenwiderstände R18, R19 sowie R20 und R21.

1703/ot/wi
5.4.33                         - 12 -

Es versteht sich, daß die bisher geschilderte Funktion beliebig zyklisch oder in vorgegebenen Abständen wiederholbar
ist, so daß dem Rechner jeweils neueste Temperaturangaben
zur Verfügung stehen und im üblichen Fall ein Temperaturverlauf durch die Messung durchfahren wird.

1703/ot/wi
5.4.33                         - 12 -

Mü 18549
R.
1703/ot/wi
5.4.83

Firma Robert Bosch GmbH, 7000 Stuttgart 1

## Patentansprüche

1. Verfahren zur Umwandlung eines Temperaturwerts oder
   -verlaufs in eine von einer logischen Steuerschaltung
   oder Rechnerschaltung auswertbare, digitale Größe,
   mit einem die Temperatur als analogen Widerstandswert
   oder -änderung abbildenden temperaturabhängigen Widerstand (NTC-Widerstand), dadurch gekennzeichnet, daß der
   jeweilige Widerstandswert in einen zeitdauermodulierten
   elektrischen Impuls umgewandelt wird.

2. Verfahren nach Anspruch 1, dadurch gekennzeichnet, daß
   der Beginn jedes zeitdauermodulierten Impulses durch
   ein Startsignal (Zeitpunkt t1) von dem digitalen System
   (Rechner 15, 15') eingeleitet wird, welches die der
   Temperatur entsprechende Dauer des Signals durch Auszählen auswertet.

3. Verfahren nach Anspruch 1 oder 2, dadurch gekennzeichnet, daß das Ende jedes zeitdauermodulierten Impulses
   (Zeitpunkt t2) sich aus der Entladung eines elektrischen
   Speichers (Kondensator C, C') bestimmt, wenn die Kondensatorspannung eine vorgegebene Schwellspannung (Us)
   eines Komparators (20, 20') erreicht.

4. Verfahren nach einem der Ansprüche 1 bis 3, dadurch gekennzeichnet, daß ein Kondensator (C) mit einer aus
   dem Verhalten des temperaturabhängigen Widerstandes
   (NTC-Widerstand) abgeleiteten analogen Temperaturspannung

1703/ot/wi
5.4.83                    - 2 -

aufgeladen und zum Zeitpunkt (t1) der Signalgabe des auswertenden digitalen Systems (Rechner 15) über ein unveränderliches Entladenetzwerk bis zum Erreichen der Komparatorschwellspannung entladen wird, so daß sich die auszuwertende Zeitdauer ($t_{\mu\mu}$ = t2-t1) vom Startsignal des Rechners (15) bis zum Zeitpunkt (t2) der Umschaltung des Komparators ergibt.

5. Verfahren nach einem der Ansprüche 1 bis 3, dadurch gekennzeichnet, daß ein Kondensator (C') auf eine konstante Spannung (Vc) aufgeladen wird mit Beginn der Entladung durch Abtrennen des Kondensators von seiner Stromversorgung durch den Startimpuls des Rechners (15') und dessen Entladung über ein Widerstandsnetzwerk, welches mindestens einen temperaturabhängigen Widerstand (NTC-Widerstand R21) enthält.

6. Verfahren nach einem oder mehreren der Ansprüche 1 bis 5, dadurch gekennzeichnet, daß der auswertende Rechner (15, 15') das temperaturabhängige Zeitintervall (t2-t1) mit Hilfe interner Software-Schleifen mißt (auszählt) und aus gespeicherten Tabellen des Temperaturverlaufs über dem Zeitintervall ($t_{\mu\mu}$ = f$(\mu\vartheta)$ die entsprechenden Temperaturwerte abspeichert.

7. Vorrichtung zur Umwandlung eines Temperaturwerts oder -verlaufs in eine von einer logischen Stuer- oder Rechnerschaltung auswertbare, digitale Größe, mit einem die Temperatur als analogen Widerstandswert oder -änderung abbildenden temperaturabhängigen Widerstand (NTC), dadurch gekennzeichnet, daß ein Energiespeicher (Kondensator C, C') vorgesehen ist, der von einer konstanten Spannung (Vc) oder einer durch Auswertung des NTC-Wider-

standswertes          temperaturabhängigen Spannung (U$_{\nu}$)
aufgeladen und zu einem ersten vorgebbaren Zeitpunkt
(t1) von einem den temperaturabhängigen Widerstand (NTC-
Widerstand R21) enthaltenden Widerstandsnetzwerk (R18,
R19, R20, R21) bzw. von einem Widerstandsentladenetzwerk
(R13, R14, R15) entladen wird bis zum Erreichen einer
vorgegebenen Schwellenspannung (Zeitpunkt t2) sowie mit
Mitteln (15, 15') zur Auswertung des sich ergebenden
Zeitintervalls (t2-t1).

8. Vorrichtung nach Anspruch 7, dadurch gekennzeichnet, daß
   ein den mindestens einen temperaturabhängigen Widerstand
   (NTC-Widerstand 10a) enthaltender und eine über diesen
   von der zu erfassenden Temperatur abhängige Temperaturspannung (U$_{\nu}$) erzeugender Temperaturspannungsblock (10),
   ein diesem nachgeschalteter Startblock (11), ein Impedanzwandler-Trenndiodenblock (12), ein Lade- und Entladeblock (13) und ein Vergleichsblock (14) vorgesehen sind,
   wobei dem Startblock (11) von einem digitalen Auswertesystem (Rechner 15) ein die Entladung des Speicherkondensators (C) in Gang setzender Startimpuls zugeführt
   ist und das Rückkippen eines Komparators (20) im Vergleichsblock (14) das Ende (t2) des temperaturabhängigen Zeitintervalls (t2-t1) darstellt.

9. Vorrichtung nach Anspruch 8, dadurch gekennzeichnet, daß
   eine an eine konstante Versorgungsspannung (Uo) angeschlossene, mit der Temperaturspannung (U$_{\nu}$) beaufschlagte Teilerschaltung (R10, R11) vorgesehen ist, deren Verbindungspunkt über einen Impedanzwandler (19) mit nachgeschalteter Diode (D2) als ideales Sperrglied an den Speicherkondensator (C) angeschlossen ist und ferner über eine
   Trenndiode (D1) an einem Schaltglied (Transistor T1)

1733/34/wi
3.4.83
                              - 4 -

liegt, dem der ihn leitend schaltende Startimpuls vom
auswertenden Rechner (15) zugeführt ist, derart, daß
bei Eintreffen des Startimpulses    (Zeitpunkt t1) der
Impedanzwandler (19) mit Diode den Kondensator (C) von
der Temperaturspannung trennt und zur Entladung über das
Widerstandsteilernetzwerk (R13, R14, R15) freigibt
bis zum Erreichen der am anderen Eingang eines nachgeschalteten Komparators (20) anliegenden Schwellspannung, Umschalten des Komparators zu diesem Zeitpunkt
(t2) und Weiterleiten des Signals an den auswertenden
Rechner (15).

10. Vorrichtung nach Anspruch 7, dadurch gekennzeichnet, daß
der Speicherkondensator (C') über einen vom auswertenden
Rechner (15') ständig leitend geschalteten Transistor
(T1') an konstanter Versorgungsspannung (Vc) liegt und
zum Startzeitpunkt (t1) von der Versorgungsspannung abgeschaltet und zur Entladung über ein den NTC-Widerstand (R21) enthaltendes Widerstandsteilernetzwerk (R18,
R19, R20, R21) freigegeben ist mit Auswerten der sich
ändernden Kondensatorspannung durch Vergleich mit einer
am anderen Eingang eines nachgeschalteten Komparators
(20') anliegenden Schwellspannung (Us) und Weiterleitung
des sich ändernden Komparatorausgangssignals zum auswertenden Rechner (15').

# Fig. 1

# Fig. 2

2/3

# Fig. 3

P13'  H
L
$t_1$

a.)

$U_C = f(\vartheta)$

b.)

$U_S$

0

$t_2$ $t_3$

H

P14  L

c.)

$t_\vartheta$

# Fig. 4

$t_\vartheta$ [ms]   NTC „ab"

3,8

1,0

-50  -30   0   20        80      120   $\vartheta$ [°C]

3/3

# Fig.5

# Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 267 468 (S.E. HILLIKER) * Figuren 1, 2; Spalte 2, Zeile 48 - Spalte 4, Zeile 11 * | 1-3 | G 01 K 7/24 G 08 C 19/22 H 03 K 7/08 |
| A | * Figur 1 * | 5,7 | |
| A | DE-A-2 826 723 (EPPENDORF GERÄTEBAU NETHELER & HINZ GMBH) * Anspruch 1; Figur 3; Seite 16, Zeile 6 - Seite 18, Zeile 14 * | 4,7 | |
| A | DE-A-2 455 179 (CEMO INSTRUMENTS AB) | | |
| A | US-A-3 555 298 (L.J. NEELANDS) | | RECHERCHIERTE SACHGEBIETE (Int. Cl. 3) |
| | | | G 01 K 7/16 G 01 K 7/22 G 01 K 7/24 G 08 C 19/16 G 08 C 19/22 H 03 K 7/08 |

Der vorliegende Recherchenbericht wurde für alle Patentansprüche erstellt.

| Recherchenort BERLIN | Abschlußdatum der Recherche 30-07-1984 | Prüfer ARENDT M |
|---|---|---|